# EUROPEAN PATENT APPLICATION

(11) **EP 1 267 244 A2**
(43) Date of publication of application: **18.12.2002**
(21) Application number: 02077143.2
(22) Date of filing: 30.05.2002
(51) Int. Cl.: G06F 1/00

(54) **Delivery of electronic content over a network using a hybrid optical disk for authentication**

(30) Priority: 11.06.2001 US 878446
(71) Applicant: EASTMAN KODAK COMPANY, Rochester, New York 14650 (US)
(72) Inventor: Inchalik, Michael Alan, c/o Eastman Kodak Company, Rochester, New York 14650-2201 (US); Mueller, William James, c/o Eastman Kodak Company, Rochester, New York 14650-2201 (US)
(74) Representative: Parent, Yves

(57) **Abstract**

A method of transferring information from a content supplier from one or more databases, such information including program(s), audio, still, video, data files (for example lists, spreadsheets, reports, documents, presentation graphics, sales information), or combinations thereof to a location that uses an authorizing hybrid disc that permits the use of such transferred information, comprising the steps of: providing an authorizing hybrid optical disc having a ROM portion and a RAM portion; providing the ROM portion to include a preformed identification signature which is impressed into the ROM portion of the disc and is arranged to be difficult for a pirate to copy; providing the RAM portion which includes user-specific encrypted information which makes the optical disc unique for a specific user and in combination with the ROM preformed identification signature provides a user-personalized secure signature; the content supplier encrypting information for each user using the user-personalized secure signature and downloading selected encrypted information to the particular user's memory location; and a particular user using the user-personalized secure signature to decode such downloaded selected encrypted information each time the user desires to access such information so that after use only the encoded encrypted information remains in the user memory location.

## Description

The present invention relates to delivering electronic content in a secure manner from a remote location.

With the proliferation of computerized equipment on a large scale, the easy and rapid sharing of data once shared exclusively by "hard copy" methods is becoming more of a reality. This includes text, music, still pictures, games, software, video, and other types of information. The widespread use of the Internet has allowed users to download all types of information from remote locations. This has created a new information distribution model whose characteristics include speed, customer convenience, ease of bringing a work to market, and lower costs. Because much of the physical production of such works can be eliminated, a significant cost and time savings can be realized in bringing a work to market. Significant marketing improvements are also possible. For instance, a well-stocked store can now be the size of a kiosk or can be located in a single location and still be convenient to users throughout the world.

With these considerable advantages come some disadvantages due to the ease of distribution. Primary among these is that the ease of distribution allows easy illicit proliferation of works. While it can take considerable time and effort to duplicate and distribute a traditional book, audio recording, or video to others, it is easier and takes far less time and effort to duplicate and distribute an electronic copy of the same work. This is of considerable concern to authors, artists, musicians, programmers, producers, publishers, and others whose works are not in the public domain.

This problem has been recognized, and several schemes have been developed to encrypt programs and data so that they can only be used by the intended recipient. Some schemes are based on encrypting the data with a specific key, and transmitting the key along with the encrypted data, to the intended recipient. However, if the recipient is willing to share the key with the encrypted file, these schemes can be circumvented.

DeMont US-A-5,982,889 teaches a method for verifying the authenticity of a user's access to information products. The disadvantage of this system is that authentication is done via a central site. The user who does not wish to (or cannot) connect to the network every time he wishes to use the product is excluded from using this product.

Akiyama and others, US-A-5,805,699, propose a software copying system which enables copyrighted software recorded in a master storage medium to be copied to a user's target storage medium in a legitimate manner. The master storage medium (that is, CD-ROM) has a software identifier, and the target storage medium has a storage medium identifier. The two identifiers are sent to a central site, which manages licensing for the rights to copy software products. At the central site, a first signature is generated from the two identifiers which is sent back to the computer user. In the computer of the user a second signature is generated from the same two identifiers. Only when the two signatures coincide with each other can the software programs be copied from the master storage medium to the target storage medium.

There are various problems associated with these methods. One is that many of them are open to what are known as "hacks," which means that if one user determines the method of decrypting or using the application or data, it is very easy for that person to disseminate the manner of gaining access to the application or data. Some methods prevent this problem by making the use of information dependent upon a particular hardware combination. This approach creates a problem of portability. The legitimate user cannot use the product on a computer in a different location, nor can the user exercise fair use (for example resale, lending). The application may fail to start or the data may be unreadable if users change their hardware configuration, such as by an upgrade.

It is therefore an object of the present invention to provide a legitimate user with content that can be downloaded readily from a network, such as the Internet, and used at multiple locations by the legitimate user.

It is a further object of the present invention that the content is protected against use and access to confidential information by an illegitimate user.

These objects are achieved by a method of transferring information from a content supplier from one or more databases, such information including program(s), audio, still pictures, video, data files (for example lists, spreadsheets, reports, documents, presentation graphics, sales information), or combinations thereof to a location that uses an authorizing hybrid disc that permits the use of such transferred information, comprising the steps of:
(a) providing an authorizing hybrid optical disc having a ROM portion and a RAM portion;
(b) providing the ROM portion to include a preformed identification signature which is impressed into the ROM portion of the disc and is arranged to be difficult for a pirate to copy;
(c) providing the RAM portion which includes user-specific encrypted information which makes the optical disc unique for a specific user and in combination with the ROM preformed identification signature provides a user-personalized secure signature;
(d) the content supplier encrypting information for each user using the user-personalized secure signature and downloading selected encrypted information to the particular user's memory location; and
(e) a particular user using the user-personalized secure signature to decode such downloaded selected encrypted information each time the user desires to access such information so that after use only the encoded encrypted information remains in the user memory location.

The use of an authorizing hybrid optical disc for transferring content has advantages for both the supplier of the content and the user.

The content supplier can easily supply the content over a network, such as the Internet, which allows a potential world-wide audience with small overhead. The content supplied to a user can be "locked" to that user, so that an unauthorized user cannot use the content without the authorized user's authorizing disc. The supplier can supply confidential information, if there is a need, through the use of authorizing discs that can give the user access to this information, but the user cannot distribute this to others without also providing the single authorizing disc.

Further, if some content, such as a game, is lost or stolen, individual identification in the content relating to the disc it was originally "locked" to allow the origin of the loss to be traced. Additional security measure can also be added to the basic features.

Advantages to the user include that the content is easily procured over a network connection, such as the Internet, despite the fact that it is locked to a particular user's authorizing disc. The content is portable; if the user wishes to take it along while travelling, the user can copy the content (for example to the computer's hard drive), then bring the disc and use it on any computer equipped with an optical disc drive, such as CD-ROM drive, DVD reader, and so forth. Further, should the user have an optical disc writer, the user can download more than one program or document to his authorizing disc. As long as room exists to write the content to the disc, the user could install additional content, which he could then use by only needing to bring a single disc along.

A further advantage is that this invention allows the user to exercise fair use while protecting the content owner from unauthorized distribution by the user. Users can lend, resell, or give away their copies of data and/or software, but they must lend/resell/give their authorizing disc to allow the use of the content. The user cannot distribute multiple copies after purchasing only a single copy.

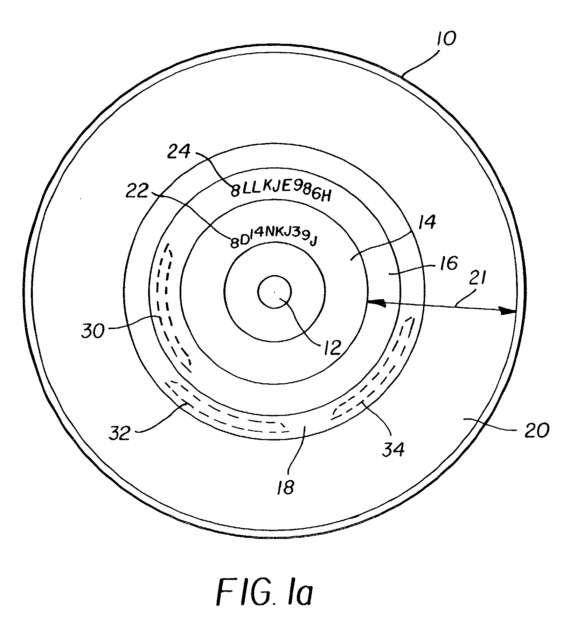

FIG. 1a is a plain view of an authorizing hybrid optical disc which allows copy protection in accordance with the present invention;

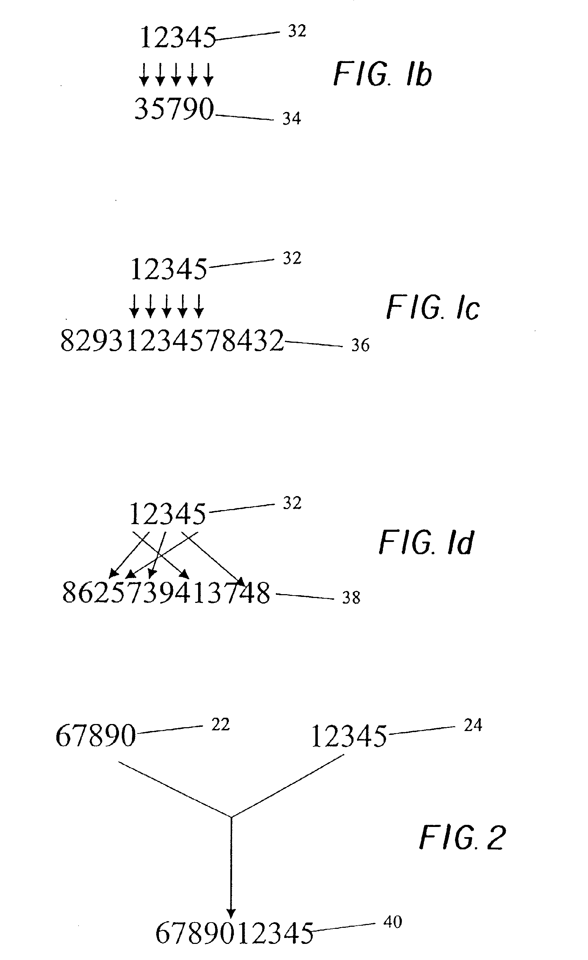

FIG. 1b shows a schematic diagram of a substitution scheme of encryption;

FIG. 1 c shows a schematic diagram of a simple hiding scheme of encryption;

FIG. 1d shows a schematic diagram of a more complex hiding scheme of encryption;

FIG. 2 shows a method of forming a secure signature;

FIG. 3 is a schematic diagram of the software technique to encrypt a client application in a non-copyable way;

FIG. 4 is block diagram showing an embodiment of a method for making an optical disc for use in this invention;

FIG. 5a is a schematic diagram of how various software routines on different computers connected by a network interact to verify authenticity;

FIG. 5b is a schematic diagram showing the public keys available for encryption and their complementary private keys available for decryption and message signing;

FIG. 6a is a schematic diagram showing the flow of data for delivering encrypted information;

FIG. 6b is a schematic diagram showing an alternative flow of data for delivering encrypted information;

FIG. 6c is a block diagram showing an embodiment of a method by which the holder of the disc can obtain new content;

FIG. 6d is a block diagram which shows how the public and private keys are used to create a secure channel for communication in the decryption of decrypted data;

FIG. 7 is a schematic diagram of the software technique to encrypt an executable application for handling encrypted data in a non-copyable way;

FIG. 8 is a block diagram which shows how the copy-protection scheme works when a hybrid optical disc including an encrypted executable file is read;

FIG. 9a is a schematic diagram of how various software routines on the same computer interact to verify authenticity and decrypt encrypted data;

FIG. 9b is a schematic diagram showing the public keys available for encryption and their complementary private keys available for decryption and message signing;

FIG. 10 is a block diagram which shows how the copy-protection scheme works when a hybrid optical disc including an encrypted data file is read; and

FIG 11 shows another embodiment of the present invention.

Turning now to FIG. 1, we see a diagram of authorizing hybrid optical disc 10. Authorizing hybrid optical disc 10 is a hybrid optical disc; that is, it includes both a mastered pre-recorded area, also known as a ROM portion 14, and a recordable area, also known as a RAM portion 21. The disc includes a center hole 12 for clamping and spinning. ROM portion 14 is a mastered session; that is, a master disc was created including supplied software or data in the first session, and was subsequently used, either directly or through intermediate "Father" and "Mother" discs-to stamp multiple uncustomized copies of the disc. Additional mastered sessions are also possible. RAM portion 21 can be of a write-once type (for example CD-WO or CD-R) or a rewriteable type (for example CD-RW), which can be written to by standard optical-disc writing techniques. Authorizing hybrid optical disc 10 also includes a preformed identification signature 22, which is a digital signal recorded during the mastering process and subsequently impressed into ROM portion 14 of each authorizing hybrid optical disc 10.

In a part of RAM portion 21, a second session or written session 16 has been written by a content supplier or other authorized party prior to distribution. A content supplier is defined as a person or entity engaged in the production, sale, or resale of information content (for example audio, video, text, data, and so forth) who wishes to use authorizing hybrid optical disc 10 to make the content available to end users in a manner difficult to copy. The content supplier maintains the information content in its own databases and transfers information to end-users via a network (for example the Internet). Written session 16 can be a third or later session if authorizing hybrid optical disc 10 already includes more than one session. Written session 16 includes a unique identification number or unique ID, also known as user-specific encrypted information 24 that is written in one or more known absolute sector addresses in an encrypted manner. User-specific encrypted information 24 serves to make each hybrid optical disc 10 unique for a specific user by virtue of the fact that each user-specific encrypted information 24 written to the hybrid optical disc 10 is a unique combination of binary digits. User-specific encrypted information 24 is also designed to be combined with preformed identification signature 22 to form a user-personalized secure signature.

In some embodiments, written session 16 can include other programs or information. For example, authorizing hybrid optical disc 10 can further include an encrypted client application package 30, which includes a client application to verify the authenticity of authorizing hybrid optical disc 10 in a secure way.

Authorizing hybrid optical disc 10 can further include one or more additional written session(s) 18 that are written using recordable optical disc techniques, such as a CD-R, CD-WO, or CD-RW writer. This session can be written at any time after distribution of authorizing hybrid optical disc 10 and can include an encrypted data package 32 and an encrypted executable package 34. Authorizing hybrid optical disc 10 can also include further writeable area 20, which is the as-yet-unwritten part of RAM portion 21.

By the term "written in an encrypted manner" we mean written in such a way that the contents are not clear to a reader who does not know how the data is stored. Turning now to FIG. 1b, 1c, and 1d, we see schematic diagrams of several example methods of encryption. FIG. 1b shows a substitution scheme in which the symbols of unique identification 35 are replaced, on an individual basis or in blocks, with other symbols or groups of symbols 36. FIG. 1c shows a simple hiding scheme in which unique identification 35 is hidden among a longer series of symbols 37. Its position and length must be known to effect decryption. FIG. 1d shows a more complex hiding scheme in which the symbols of unique identification 35 are scrambled, either individually or in groups, and hidden among a larger series of symbols 38. This invention can use one or more of these or other schemes to write user-specific encrypted information 24 in an encrypted manner to RAM portion 21 of authorizing hybrid optical disc 10.

Turning now to FIG. 2, we see one method of forming a user-personalized secure signature. Preformed identification signature 22 and user-specific encrypted information 24 are concatenated to provide user-personalized secure signature 72.

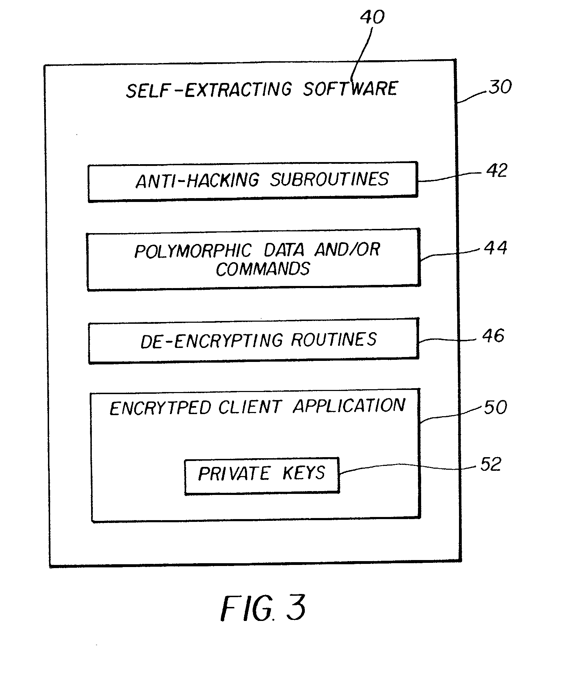

Turning next to FIG. 3, we see a diagram of one way that encrypted client application package 30 can be structured and written to authorizing hybrid optical disc 10 for use in this invention. Encrypted client application package 30 is a single executable program with the same name on the disc as the original executable program. Encrypted client application package 30 includes self-extracting software 40 which runs first. It further includes anti-hacking routines 42 to check for the presence of hacking software in memory when the program is run. It can further include a section with polymorphic data and/or commands 44. Polymorphic code generally provides multiple paths which achieve the same results, but are constructed in such a way that a program follows a different path each time it executes. Polymorphic code is used to make the program more difficult to reverse-engineer. De-encrypting routines 46 are designed to use the data stored on authorizing hybrid optical disc 10 (specifically preformed identification signature 22 and user-specific encrypted information 24) to de-encrypt encrypted client application 50. Encrypted client application package 30 further includes a private keys area 52, which includes a set of private encryption keys that are used to verify the authenticity and integrity of authorizing hybrid optical disc 10 in a secure manner by utilizing public key encryption.

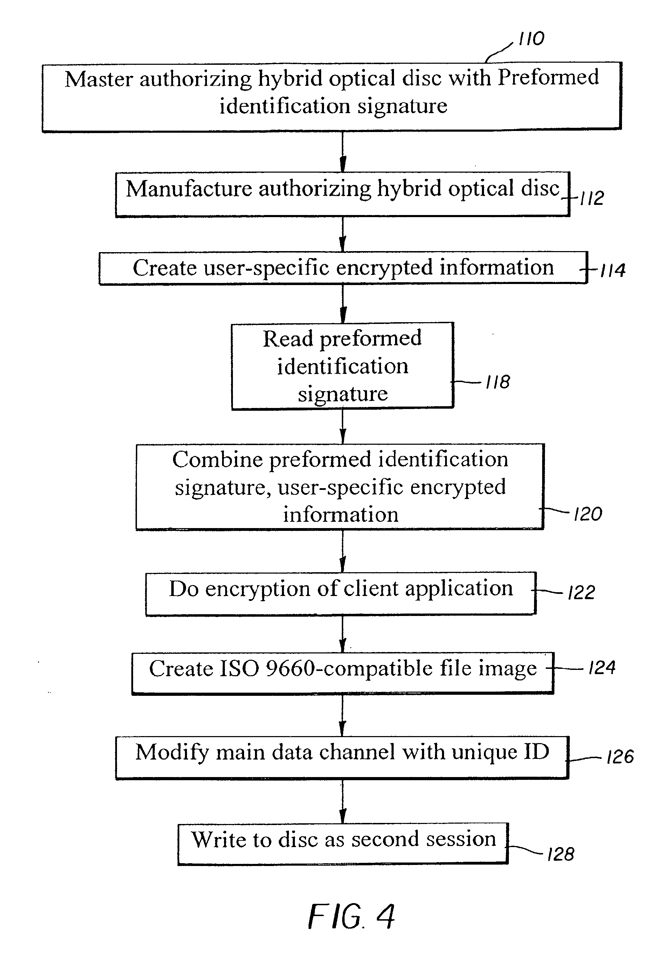

Turning now to FIG. 4, we see a block diagram of one method for making the optical discs to be used in this invention. A hybrid optical disc is mastered with preformed identification signature 22 in step 110, and then used to manufacture a set of authorizing hybrid optical discs 10 with the same preformed identification signature 22 in step 112. All succeeding information transfers to the disc are by standard CD writer techniques. In step 114, user-specific encrypted information 24 is generated for an individual authorizing hybrid optical disc 10. Preformed identification signature 22 is read from the disc (step 118) and concatenated with user-specific encrypted information 24 to form user-personalized secure signature 72, which also serves as the encryption key (step 120). User-personalized secure signature 72 is used to uniquely encrypt the client application 62 in step 122. Encrypted client application 50 is inserted into a previously-created ISO 9660-compatible file image in step 124. The main data channel of the session is modified with the user-specific encrypted information 24 (step 126) and the entire package is written to authorizing hybrid optical disc 10 as RAM portion 16 in step 128. Authorizing hybrid optical discs 10 can then be distributed in any manner (for example mailed, distributed through stores, and so forth)

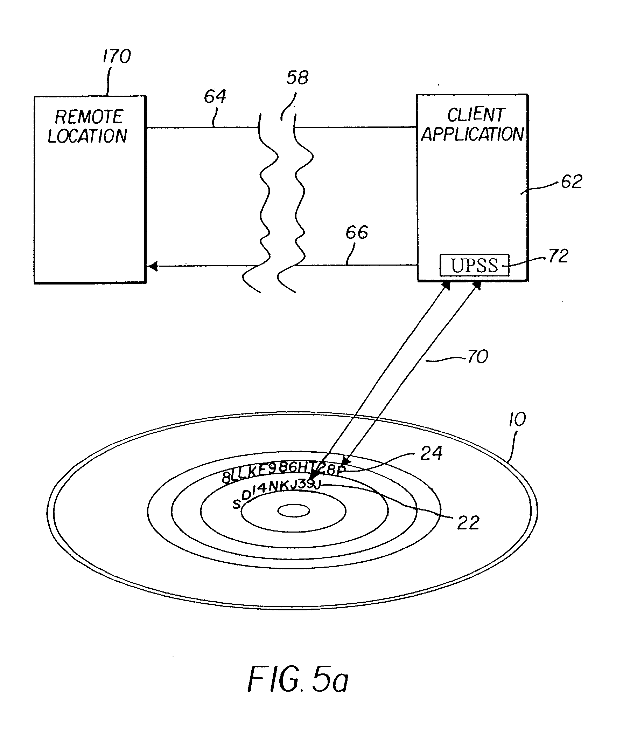

Turning now to FIG. 5a, we see a schematic view of the way that user-personalized secure signature 72 is passed to a remote location in a secure manner in order to verify the authenticity of authorizing hybrid optical disc 10 and subsequently to encrypt the desired content. This requires the use of a method which allows verification of the validity of authorizing hybrid optical disc 10 by a remote location 170. Client application 62 runs on an end-user's computer system, which is physically remote from remote location 170, but is connected via network 58 (for example the Internet). Remote location 170 includes a method of encrypting and sending the desired content. Client application 62, which is originally encrypted on authorizing hybrid optical disc 10 as encrypted client application 50 within encrypted client application package 30, is designed to read preformed identification signature 22 and user-specific encrypted information 24 from authorizing hybrid optical disc 10 in data read step 70, and combine them into user-personalized secure signature 72. Remote location 170 sends a key request 64 for user-personalized secure signature 72 to client application 62. Included in key request 64 is a message to use one of a plurality of keys from private keys area 52 when answering the request. Client application 62 returns user-personalized secure signature 72 to remote location 170 in signed message 66 that has been signed with the selected private key. Remote location 170 possesses the public key corresponding to the chosen private key, and can verify the authenticity of client application 62, and therefore of authorizing hybrid optical disc 10. Remote location 170, once it possesses user-personalized secure signature 72, can encrypt the desired content. This will be further elaborated in what follows.

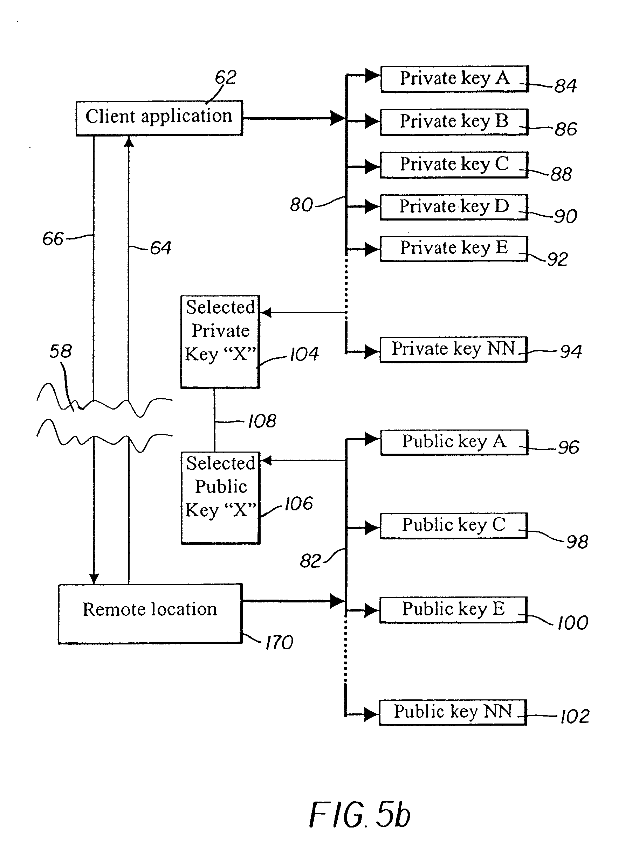

Turning now to FIG. 5b, we see a schematic of the private keys available in private keys area 52, their corresponding public keys, and how they are used between remote location 170 and client application 62. Client application 62 has been provided with a private key series 80, which is stored in private keys area 52 of encrypted client application package 30. These private keys are capable of decrypting messages that have been encrypted with the corresponding public key, and they are also capable of signing messages in a secure way. For example, private key 84 (other private keys 86, 88, 90 and 92 are also shown) can decrypt messages that have been encrypted with public key 96 (other public keys 98, 100 and 102 are also shown). Public key 96 can check the authenticity of messages signed by private key 84. Remote location 170 includes a public key series 82 of public keys corresponding to the private keys in private key series 80. Public key series 82 can include the entire set of keys corresponding to private keys series 80, or can be a subset thereof. The latter arrangement allows certain keys to be maintained exclusively for one application or one vendor without modifying the client application. If the security of any key is compromised, that particular key can be removed from remote location 170, and the security breach is thereby closed.

Remote location 170 randomly selects a public key "X" from public key series 82, making it selected public key 106. Remote location 170 sends key request 64 to client application 62 and indicates in key request 64 which key has been selected to be selected public key 106. Client application 62 selects the corresponding private key from private key series 80 to give the selected private key 104. The selected public key 106/selected private key 104 pair form public/private key channel 108. Client application 62 uses private key 104 to sign signed message 66 that is sent to remote location 170.

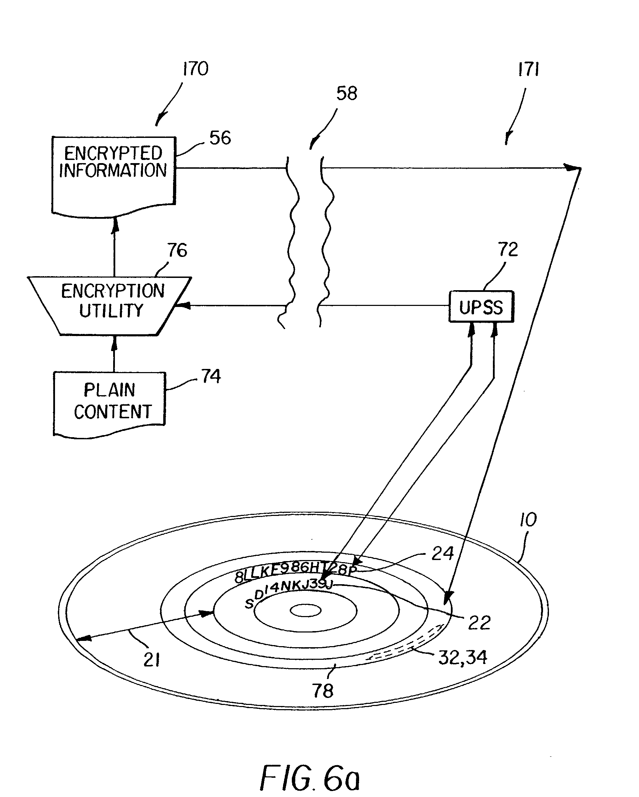

Turning now to FIG. 6a, we see a schematic diagram showing the flow of data that occurs when a user requests new content. This content can be including program(s), audio, still, video, data files (for example lists, spreadsheets, reports, documents, presentation graphics, sales information), or combinations thereof. At user site 171, preformed identification signature 22 and user-specific encrypted information 24 are used to form user-personalized secure signature 72. User-personalized secure signature 72 is sent via network 58 to remote location 170. At remote location 170, plain content 74, which is the unencrypted version of the content ordered by the user, is encrypted by encryption utility 76 using user-personalized secure signature 72. This creates selected encrypted information 56. Depending on the nature of plain content 74, selected encrypted information 56 is either encrypted data package 32 or encrypted executable package 34. Because these are encrypted using user-personalized secure signature 72 as the key, the user who possesses authorizing hybrid optical disc 10 will be able to use selected encrypted information 56. Selected encrypted information 56 is then downloaded via network 58 to user site 171. At user site 171, selected encrypted information 56 is written to memory location 78. In this example, memory location 78 is additional written session 18 in RAM portion 21 of authorizing hybrid optical disc 10. The memory location can be any other location capable of storing digital content (for example a hard drive, a floppy disk, flash ROM, and others).

It will be appreciated that the nature of networks allows a plurality of users to simultaneously access remote location 170 and download content. Remote location 170 receives the user-personalized secure signature 72 for each particular user, encrypts plain content 74 with that particular user's user-personalized secure signature, and downloads the encrypted information 56 to that particular user's memory location 78.

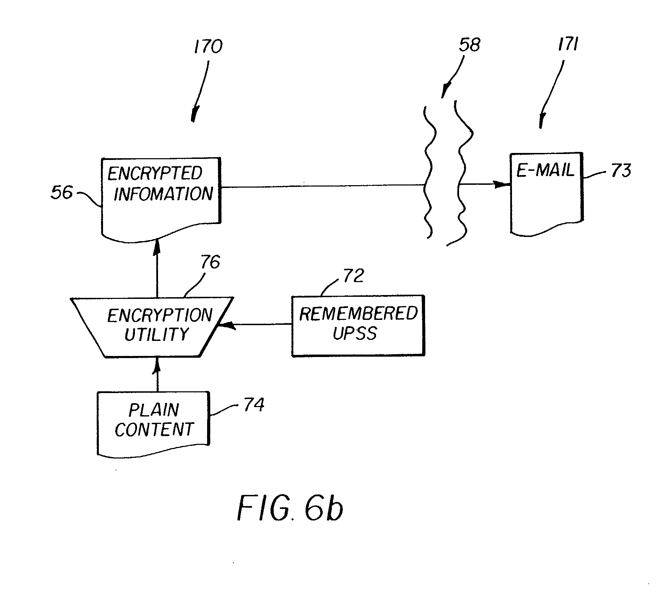

Turning now to FIG. 6b, we see a schematic diagram showing an alternative flow of data for delivering encrypted content to a user. In this embodiment, user-personalized secure signature 72 is filed at the content supplier's remote location 170. At a request for content, plain content 74, which is the unencrypted version of the content ordered by the user, is encrypted by encryption utility 76 using stored user-personalized secure signature 72. This creates selected encrypted information 56. Depending on the nature of plain content 74, selected encrypted information 56 is either encrypted data package 32 or encrypted executable package 34. Because these are encrypted using user-personalized secure signature 72 as the key, the user who possesses authorizing hybrid optical disc 10 will be able to use selected encrypted information 56. Selected encrypted information 56 can then be delivered to the registered user, for example via electronic mail message 73. This encryption/delivery method allows someone other than the user (for example a relative buying a gift) to purchase encrypted content for a given user. Depending on security considerations, a content supplier may or may not include this service.

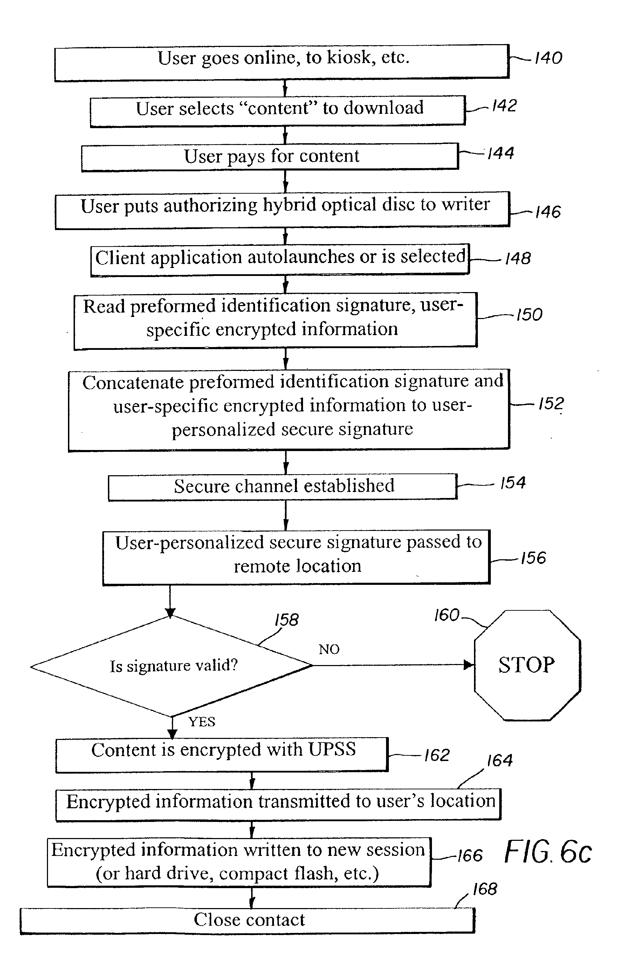

Turning now to FIG. 6c, we see a method by which the user, who is the holder of the disc, can obtain new content. In step 140, the user communicates with a content supplier via a network. The user can connect to an Internet site from his home, or can go to another place, such as a kiosk that sells and transfers this type of content. There are a number of means by which a user can achieve a connection with a content supplier. The content supplier's remote location 170 can be accessible via a channel (for example a network, the Internet, and so forth). The user can type in the address (for example an Internet URL) of the content supplier. Alternatively, authorized hybrid optical disc 10 can be encoded with a link that connects the user to remote location 170, either automatically or by the user clicking on a link. The latter alternative removes the possibility of user error in typing a network address.

The user then selects content that he wishes to download (step 142) and if necessary makes payment for the content (step 144) via normal means of payment over a network (for example credit card payment over the Internet). The content can be a game, music, video, text such as a book, or any other type of downloadable information. The payment can be any normal means of making payment via a network. The user can transfer a payment number (for example a debit or credit card number) which authorizes a predetermined payment amount to the content supplier from the user's bank or other commercial institution. Another form the payment number can take is an authorization number from the content supplier which gives the user a number of downloads that has been predetermined (for example by prepayment from the user, promotional considerations of the content supplier, and so forth).

Once the user has selected and paid for the desired content, the user places authorizing hybrid optical disc 10 into a disc writer in step 146. A publicly accessible kiosk would be furnished with such a disc writer. If the user is at home, he must have an optical disc writer if memory location 78 is in RAM portion 21 of authorizing hybrid optical disc 10. Client application 62 autolaunches or is selected (step 148). Client application 62 reads preformed identification signature 22 and user-specific encrypted information 24 (step 150) and concatenates them into user-personalized secure signature 72, which also serves as the decryption key (step 152). A secure channel is established between client application 62 and remote location 170 (step 154) and user-personalized secure signature 72 is provided to remote location 170. (Step 156).

In step 158, if remote location 170 determines that user-personalized secure signature 72 is invalid, or if it is missing, the process stops (step 160). If user-personalized secure signature 72 is valid, the authorization for transfer is permitted and remote location 170 encrypts plain content 74 using user-personalized secure signature 72 (step 162). Encrypted information 56 (embodied as encrypted data package 32 or encrypted executable package 34) is transmitted to the writer (step 164), where it is written to a new session (step 166). This is known as an authorized transfer because the user has made payment and has been verified as possessing a valid authorizing hybrid optical disc 10. Once the content is completely written, the contact is closed (step 168).

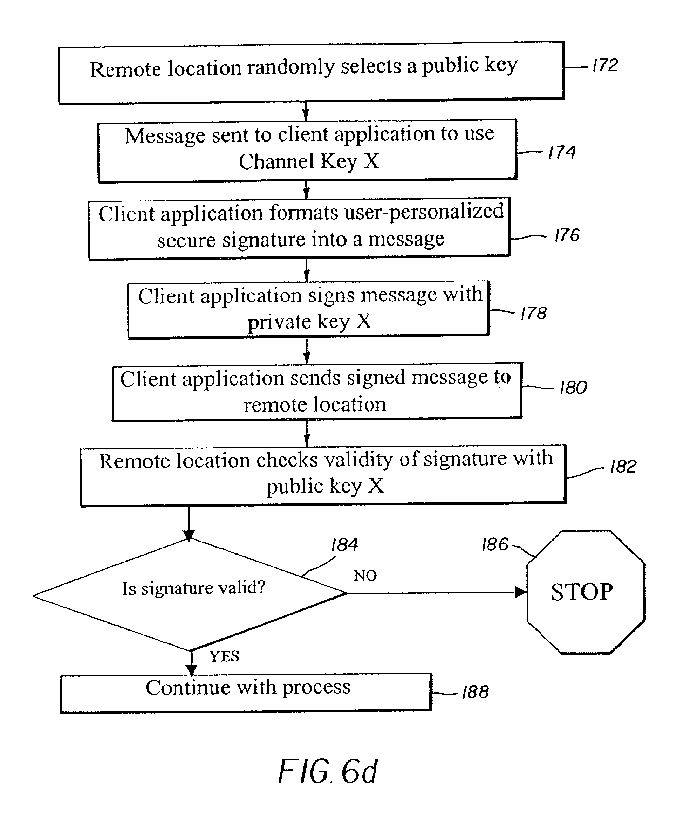

Turning now to FIG. 6d, we see a block diagram showing more details of the secure method for transmitting user-personalized secure signature 72. In step 172, remote location 170 randomly chooses selected public key 106 from public key series 82. In step 174, remote location 170 sends key request 64 to client application 62 to use public/private key channel 108 (that is the random key it has selected). Client application 62 formats user-personalized secure signature 72 into a message (step 176) which it then signs with selected private key 104 (step 178). Client application 62 then sends signed message 66 to remote location 170 (step 180). Remote location 170 receives signed message 66 and uses selected public key 106 to verify signed message 66 (step 182). If signed message 66 is not valid (step 184), the process stops (step 186). If signed message 66 is valid, the process then continues (step 188).

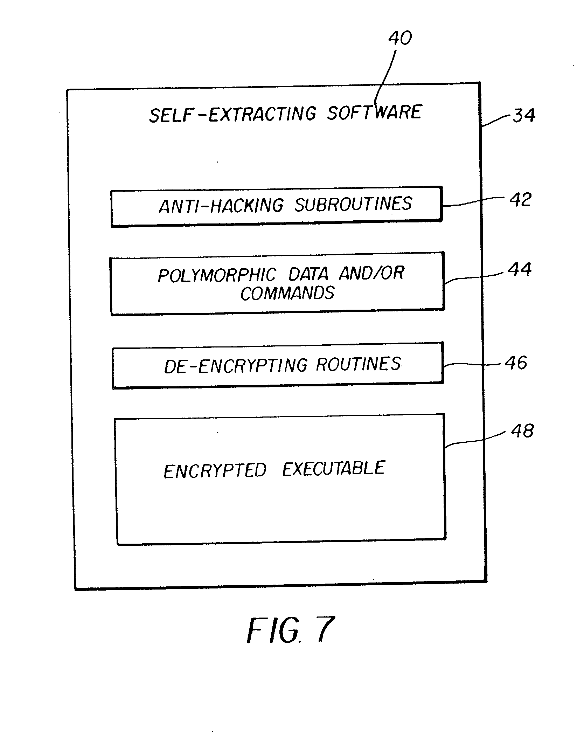

Once the user has downloaded encrypted information 56 in an authorized transfer, authorizing hybrid optical disc 10 serves to allow the user access to the encrypted information. Encrypted information 56 can be encrypted data (embodied as encrypted data package 32) or an encrypted executable program (embodied as encrypted executable package 34). We first describe the user's access to the encrypted executable program. Turning to FIG. 7, we see a diagram of one way that encrypted executable package 34 can be structured and written to authorizing hybrid optical disc 10 for use in this invention. Encrypted executable package 34 is a single executable program with the same name on the disc as the original executable program. Encrypted executable package 34 includes self-extracting software 40 which runs first. It further includes anti-hacking routines 42 to check for the presence of hacking software in memory when the program is run. It further includes a section with polymorphic data and/or commands 44. Polymorphic code generally provides multiple paths which achieve the same results, but are constructed in such a way that a program follows a different path each time it executes, and makes the program more difficult to reverse-engineer. De-encrypting routines 46 are designed to use the data stored on authorizing hybrid optical disc 10 (specifically preformed identification signature 22 and user-specific encrypted information 24) to de-encrypt encrypted executable 48.

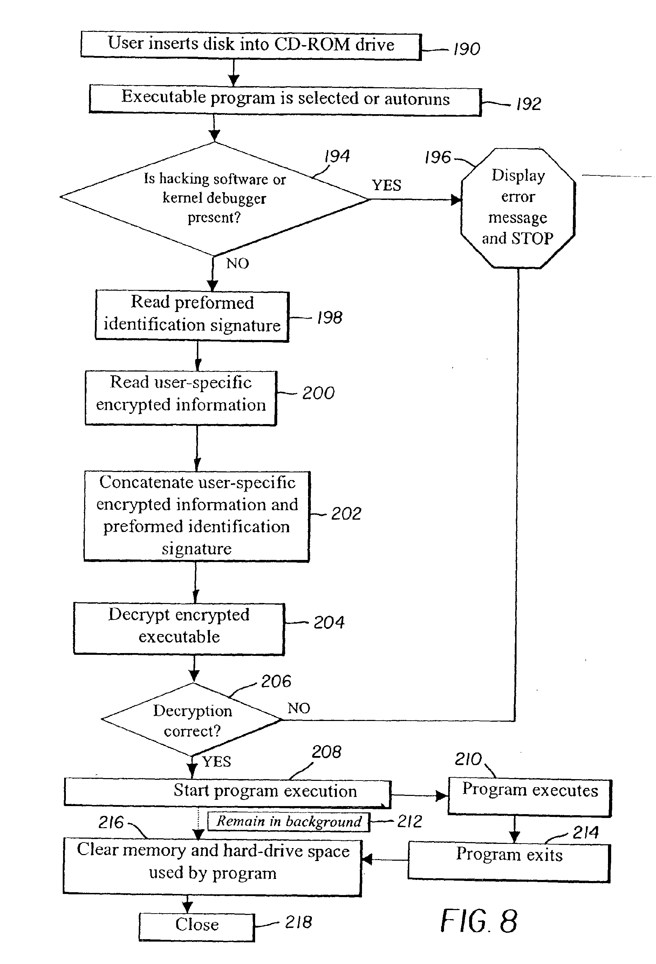

Turning now to FIG. 8, a method is shown by which this invention is designed to operate with encrypted executable package 34 in the hands of the end-user. In step 190, the end-user inserts authorizing hybrid optical disc 10 into an optical disc drive (for example CD-ROM, CD-R, or CD-RW drive). Encrypted executable package 34 on authorizing hybrid optical disc 10 runs automatically or is selected (step 192). The program first uses anti-hacking routines 42 to check for hacking software that can be used to reverse-engineer the program and defeat copy-protection schemes (step 194). If such reverse-engineering software is present, the anti-hacking routines display an error message to the user and stop automatically (step 196).

If no such reverse-engineering software is present on the end-user's system, the de-encrypting routines 46 read preformed identification signature 22 in step 198. In step 200, de-encrypting routines 46 read user-specific encrypted information 24 from authorizing hybrid optical disc 10. In step 202, de-encrypting routines 46 concatenate user-specific encrypted information 22 and preformed identification signature 24 into user-personalized secure signature 72, which also serves as the decryption key. User-personalized secure signature 72 is then used to decrypt encrypted executable 48 (step 204). The program then determines (step 206) if the decryption was valid. There are several ways of doing this, for example looking for a flag in the decrypted program or checking if operating-system-specific code is present in the decrypted executable. If the decryption was unsuccessful, an error message is displayed and the program―and the entire process―stops (step 196). If the decryption was successful, the original executable is then started (step 208).

De-encrypting routines 46 remain in the background (step 212) while the program executes (step 210) and exits (step 214). Once the original program exits, de-encrypting routines 46 clear the memory and hard-drive space used by the original program (step 216) and then close down (step 218). In this way, any decrypted form of the original executable is removed and only the encoded encrypted information (for example encrypted executable package 34) remains in the user's memory location 78. The authorization and decryption process is repeated each time the executable is started.

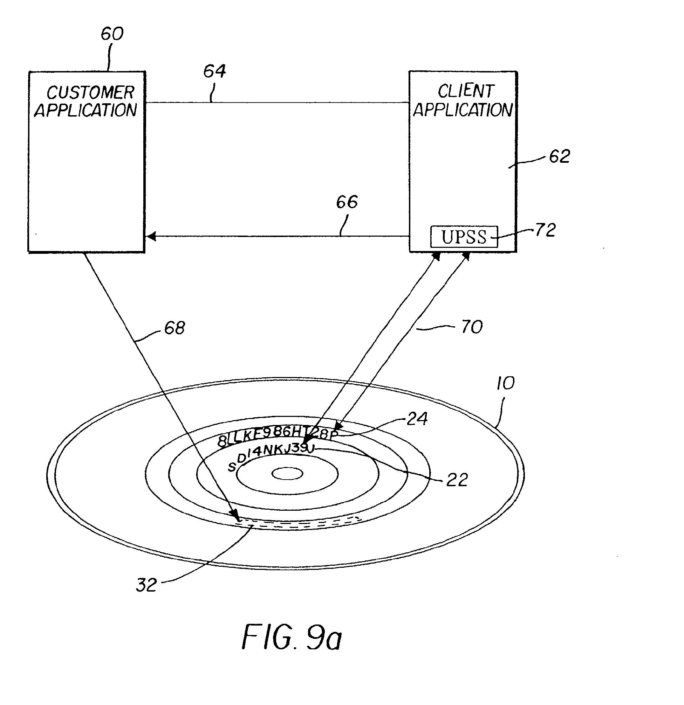

Turning to FIG. 9a, we now describe one method to give the user access to encrypted data. This method passes a decryption key in a secure manner in order to decrypt encrypted data package 32. Encrypted data package 32 can be constructed several ways. It can consist entirely of the encrypted information. In that case, supporting routines used for encrypted executable package 34 (for example self-extracting software 40, anti-hacking routines 42) are not required. Encrypted data package 32 can also be constructed to include the supporting routines. Encrypted data package 32 can be stored on authorizing hybrid optical disc 10 as shown, or in another memory location on the user's system, such as the hard drive, compact flash, and so forth.

Two applications that can communicate with each other in a secure manner are used on the same system. The first is the playback application or customer application 60, which is a data-use program (for example a text reader, spreadsheet or presentation program, sound or video playback application) that includes a routine for decrypting encrypted data package 32, but does not include a decryption key. The decryption key is passed to it by the second application. The second application is the client application 62, which is originally encrypted on authorizing hybrid optical disc 10. Client application 62 is designed to read preformed identification signature 22 and user-specific encrypted information 24 from authorizing hybrid optical disc 10 in data read step 70, and combine them into user-personalized secure signature 72, which also serves as the decryption key. Customer application 60 first sends a key request 64 for user-personalized secure signature 72 to client application 62. Included in key request 64 is a message to use one of a plurality of keys from private keys area 52 when answering the request. Client application 60 returns user-personalized secure signature 72 to customer application 60 in a signed message 66 that has been signed with the selected private key. Customer application 60 possesses the public key corresponding to the chosen private key, and can verify the authenticity of client application 62, and therefore of authorizing hybrid optical disc 10. Customer application 60, once it possesses user-personalized secure signature 72, can then read the encrypted data package 32 from authorizing hybrid optical disc 10 (data read step 68) and decrypt it. This will be further elaborated in what follows.

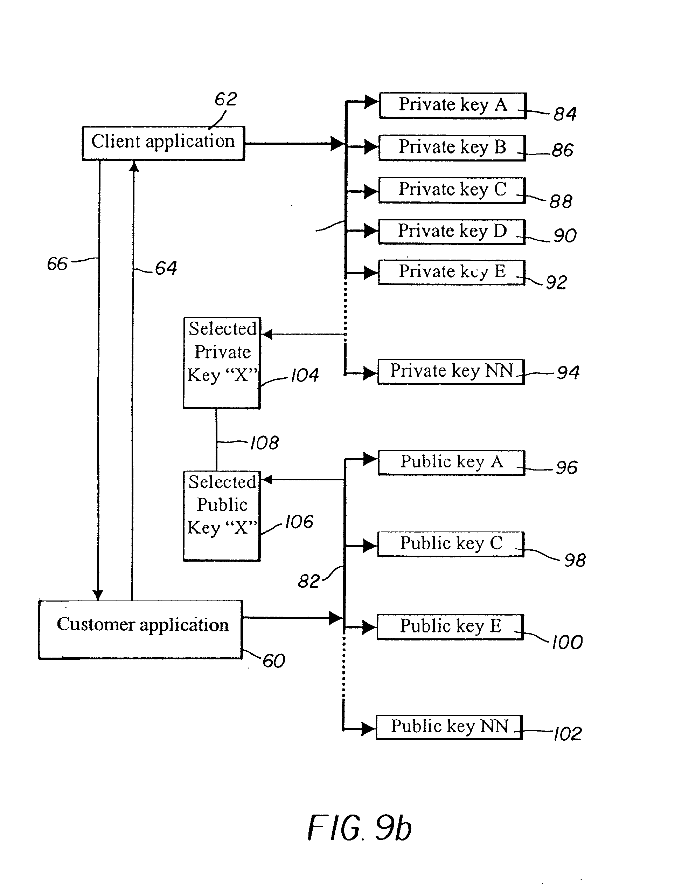

Turning now to FIG. 9b, we see a schematic of the private keys available in private keys area 52, their corresponding public keys, and how they are used between customer application 60 and client application 62. Referring to FIG. 3, client application 62 has been provided with a private key series 80, which is stored in private keys area 52 of encrypted client application package 30. These private keys are capable of decrypting messages that have been encrypted with the corresponding public key, and they are also capable of signing messages in a secure way. For example, private key 84 can decrypt messages that have been encrypted with public key 96. Public key 96 can check the authenticity of messages signed by private key 84. Customer application 60 includes a public key series 82 of public keys corresponding to the private keys in private key series 80. Public key series 82 can include the entire set of keys corresponding to private keys series 80, or can be a subset thereof. The latter arrangement allows certain keys to be maintained exclusively for one application or one vendor without modifying the client application. If the security of any key is compromised, that particular key can be removed from customer application 60, and the security breach is thereby closed.

Customer application 60 randomly selects a public key "X" from public key series 82, making it selected public key 106. Customer application 60 sends key request 64 to client application 62 and indicates in key request 64 which key has been selected to be selected public key 106. Client application 62 selects the corresponding private key from private key series 80 to give the selected private key 104. The selected public key 106/selected private key 104 pair form public/private key channel 108. Client application 62 uses private key 104 to sign signed message 66 that is sent to customer application 60.

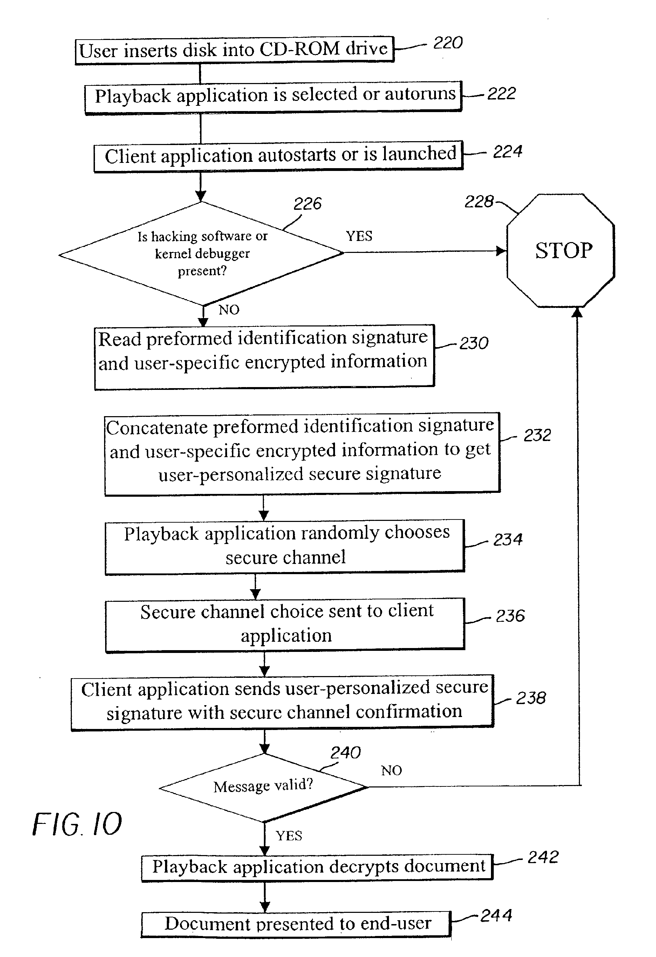

Turning now to FIG. 10, and referring also to FIGS. 3, 9a, and 9b, a first embodiment is shown by which this invention is designed to operate with an encrypted data file in the hands of a particular user who has purchased and downloaded selected encrypted information. In this embodiment, encrypted data package 32 is stored on authorizing hybrid optical disc 10. In step 220, the user inserts authorizing hybrid optical disc 10 into an optical disc drive. Customer application 60 autoruns or is selected (step 222). In step 224, client application 62 autostarts or is launched. Customer application 60 can be the agent or requestor for launching client application 62. Client application 62 first checks to see if there is any hacking software running on the host machine (step 226). Such software can be used to follow the steps that client application 62 uses, in an attempt to crack client application 62. If such software is running on the host machine, client application 62 stops (step 228) and decryption of the data is not possible.

If the host computer is determined to be safe, client application 62 reads preformed identification signature 22 and user-specific encrypted information 24 from authorizing hybrid optical disc 10 in step 230, and in step 232 concatenates the two IDs into user-personalized secure signature 72, which also serves as the decryption key. Customer application 60 randomly chooses selected public key 106 from public key series 82 (step 234). In step 236, customer application 60 sends key request 64 to client application 62, requesting that user-personalized secure signature 72 be sent with signed message 66. Client application 62 creates a message that includes user-personalized secure signature 72, signs the message with selected private key 104 as requested by customer application 60, and passes signed message 66 to customer application 60 (step 238).

Customer application 60 receives signed message 66 and, in step 240, uses selected public key 106 to verify the identity of signed message 66 and therefore of authorizing hybrid optical disc 10. If the check fails, the decryption stops (step 228) and no decrypted content is shown to the end-user. Presumably this is because the disc is counterfeit or damaged in some way. If the message is valid, customer application 60 uses user-personalized secure signature 72 to decrypt encrypted data package 32 in step 242, and then present it to the end-user (step 244).

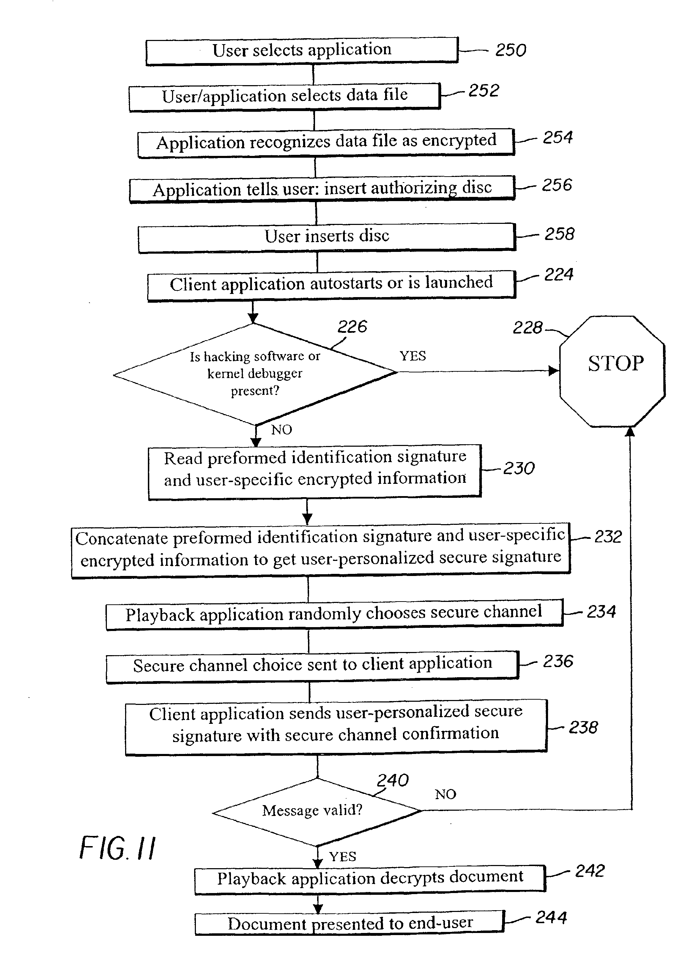

Turning now to FIG. 11, and referring also to FIGS. 3, 9a, and 9b, a second embodiment is shown by which this invention is designed to operate with an encrypted data file in the hands of a particular user who has purchased and downloaded selected encrypted information. In this embodiment, encrypted data package 32 is stored in a memory location other than authorizing hybrid optical disc 10 (for example the user's hard drive). In step 250, the user selects customer application 10 (for example audio player, document viewer, presentation program). The user or the application selects encrypted data package 32 as the data file to open in step 252. Steps 250 and 252 can be combined if the operating system allows the selection of a data file to open the corresponding application. In step 254, customer application 60 recognizes that encrypted data package 32 is encrypted data. Customer application 60 displays a message to the user that authorizing hybrid optical disc 10 must be inserted (step 256). In step 258, the user inserts authorizing hybrid optical disc 10 into an optical disc drive. In step 224, client application 62 autostarts or is launched. Customer application 60 can be the agent or requestor for launching client application 62. Client application 62 first checks to see if there is any hacking software running on the host machine (step 226).

Such software can be used to follow the steps that client application 62 uses, in an attempt to crack client application 62. If such software is running on the host machine, client application 62 stops (step 228) and decryption of the data is not possible.

If the host computer is determined to be safe, client application 62 reads preformed identification signature 22 and user-specific encrypted information 24 from authorizing hybrid optical disc 10 in step 230, and in step 232 concatenates the two IDs into user-personalized secure signature 72, which also serves as the decryption key. Customer application 60 randomly chooses selected public key 106 from public key series 82 (step 234). In step 236, customer application 60 sends key request 64 to client application 62, requesting that user-personalized secure signature 72 be sent with signed message 66. Client application 62 creates a message that includes user-personalized secure signature 72, signs the message with selected private key 104 as requested by customer application 60, and passes signed message 66 to customer application 60 (step 238).

Customer application 60 receives signed message 66 and, in step 240, uses selected public key 106 to verify the identity of signed message 66 and therefore of authorizing hybrid optical disc 10. If the check fails, the decryption stops (step 228) and no decrypted content is shown to the end-user. Presumably this is because the disc is counterfeit or damaged in some way. If the message is valid, customer application 60 uses user-personalized secure signature 72 to decrypt encrypted data package 32 in step 242, and then present it to the end-user (step 244).

This invention allows a high degree of control over remote downloading of music, video, private text and pictures, and much more. This invention and its degree of control over remote downloading can best be illustrated with some examples.

**Example 1.** A creator of electronic computer games wishes to make the games available for downloading to customers. This creates a simple distribution model that can be achieved over a network 58 such as the Internet. However, the games creator wishes to restrict the distribution beyond the end user. The games creator can have an authorizing hybrid optical disc 10 manufactured. Each disc includes preformed identification signature 22 (which is unique to that set of discs) impressed in ROM portion 14. Each disc also includes a unique user-specific encrypted information 24. The so-prepared discs can then be distributed by the games creator via any ordinary distribution means (for example by mail, at retail outlets that appeal to games players, cover-mounted to gaming magazines, and so forth) to customers or potential customers. For example, the disc may be mailed to a customer upon the purchase of one of the available games, and includes the first game that the customer buys.

For subsequent games, the user merely needs to connect to the games creator's website on the Internet and order the game(s) desired. The user pays for the games electronically. Via the techniques described herein, the games creator encrypts the desired games to the key of the user's authorizing hybrid optical disc 10 and transmits the encrypted games to the user. At the user's location, the game can be stored on authorizing hybrid optical disc 10 (if the user has an optical disc writer and sufficient space exists on authorizing hybrid optical disc 10), or in another memory location, such as the user's hard drive.

The game is an encrypted executable file that can use techniques similar to those described herein to run only if the user's authorizing hybrid optical disc 10 is available in an optical disc reader on the user's system.

In this scenario, the user is free to make copies of the downloaded games. For example, the user may wish to transfer some games to a laptop computer to make them accessible during a trip. This is possible so long as the user also brings authorizing hybrid optical disc 10. The user can even bring a game to run at a friend's house, along with authorizing hybrid optical disc 10. However, to permanently give the friend access to the game, the user would need to transfer authorizing hybrid optical disc 10, which would remove his own access to all the games that the disc allows access to. Thus, the user can freely exercise fair use of the game, while it is protected from distribution by the user.

**Example 2.** A "publisher" of electronic books (sometimes called e-books) wishes to make the books available for downloading to customers. This creates a simple distribution model that can be achieved over a network 58 such as the Internet. As in the case of games, the publisher wishes to restrict the distribution beyond the end user. The publisher can have an authorizing hybrid optical disc 10 manufactured. Each disc includes preformed identification signature 22 (which is unique to that set of discs) impressed in ROM portion 14. Each disc also includes a unique user-specific encrypted information 24. The so-prepared discs can then be distributed by the publisher via any ordinary distribution means (for example by mail, at retail outlets that appeal to readers, and so forth) to customers or potential customers. For example, the disc may be mailed to a customer upon the purchase of one of the available e-books, and includes the first e-book that the customer buys.

For subsequent e-books, the user merely needs to connect to the publisher's website on the Internet and order the e-book(s) desired. The user pays for the e-books electronically. Via the techniques described herein, the publisher encrypts the desired e-books to the key of the user's authorizing hybrid optical disc 10 and transmits the encrypted e-books to the user. At the user's location, the e-book can be stored on authorizing hybrid optical disc 10 (if the user has an optical disc writer and sufficient space exists on authorizing hybrid optical disc 10), or in another memory location, such as the user's hard drive.

The e-book is an encrypted data file that can be read using techniques similar to those described herein only if the user's authorizing hybrid optical disc 10 is available in an optical disc reader on the user's system. This requires the use of a text reader that is aware of client application 62 and uses user-personalized secure signature 72 to decrypt the encrypted data. The publisher can include such a reader on authorizing hybrid optical disc 10 with the user's first purchase.

In this scenario, the user is free to make copies of the downloaded e-books. For example, the user may wish to transfer some e-books to a laptop computer to make them accessible during a trip. This is possible so long as the user also brings authorizing hybrid optical disc 10. The user can even bring an e-book to a friend's house, along with authorizing hybrid optical disc 10. However, to permanently give the friend access to the e-book, the user would need to transfer authorizing hybrid optical disc 10, which would remove his own access to all the e-books that the disc allows access to. Thus, the user can freely exercise fair use of the e-book, while it is protected from distribution by the user.

**Example 3.** A central corporate research library wishes to make confidential reports available for downloading to scientists who have clearance at a number of varied corporate locations. This creates a simple distribution model that can be achieved over a network 58 such as a corporate intranet. It is crucial to corporate security that the distribution of such reports be strictly limited to only those cleared. The library can have an authorizing hybrid optical disc 10 manufactured. Each disc includes preformed identification signature 22 (which is unique to that set of discs) impressed in ROM portion 14. Each disc also includes a unique user-specific encrypted information 24. The so-prepared discs can then be distributed via internal corporate means to those scientists who have been cleared by management for such distribution.

To obtain reports, the scientist merely needs to connect to the library's website on the intranet and download the report(s) required. The library system can determine from authorizing hybrid optical disc 10 whether the scientist has clearance to the reports ordered. Via the techniques described herein, the publisher encrypts the reports to the key of the scientist's authorizing hybrid optical disc 10 and transmits the encrypted reports to the scientist. At the scientist's location, the report can be stored on authorizing hybrid optical disc 10 (if the scientist has an optical disc writer and sufficient space exists on authorizing hybrid optical disc 10), or in another memory location, such as the scientist's hard drive.

The report is an encrypted data file that can be read using techniques similar to those described herein only if the scientist's authorizing hybrid optical disc 10 is available in an optical disc reader on the scientist's system. This requires the use of a text reader that is aware of client application 62 and uses user-personalized secure signature 72 to decrypt the encrypted data. The library can include such a reader on each authorizing hybrid optical disc 10.

In this scenario, the scientist is free to make copies of the downloaded reports. For example, the scientist may wish to read some at home. This is possible so long as the scientist also brings authorizing hybrid optical disc 10. However, the report is unreadable to someone who does not possess the particular authorizing hybrid optical disc 10. Thus, someone else finding the file will not be able to read classified corporate information, as long as the scientist exercises caution with the "key" disc. The multiple layers of authentication and piracy checking mean that someone cannot easily make a pirated copy of authorizing hybrid optical disc 10, nor use other methods to obtain the access information and emulate authorizing hybrid optical disc 10. Because the disc is keyed to a particular scientist, access can be turned off for a lost disc without affecting other scientists.

Other features of the invention are included below.

The method wherein payment is provided by a user by transferring a payment number which can be used for transferring a predetermined payment amount from a commercial institution that can be for a number of content selections to be selected by the holder of the hybrid optical disc.

The method wherein the user-personalized secure signature includes payment authorizing information.

The method wherein the RAM portion of the hybrid optical disc is the user memory location for the downloaded content.

The method wherein a channel is used to communicate with the remote location via a network and wherein the hybrid disc is encoded with the address of the remote location.

The method wherein the channel is the Internet.

## Claims

1. A method of transferring information from a content supplier from one or more databases, such information including program(s), audio, still pictures, video, or data files (for example lists, spreadsheets, reports, documents, presentation graphics, sales information), or combinations thereof to a location that uses an authorizing hybrid disc that permits the use of such transferred information, comprising the steps of:
(a) providing an authorizing hybrid optical disc having a ROM portion and a RAM portion;
(b) providing the ROM portion to include a preformed identification signature which is impressed into the ROM portion of the disc and is arranged to be difficult for a pirate to copy;
(c) providing the RAM portion which includes user-specific encrypted information which makes the optical disc unique for a specific user and in combination with the ROM preformed identification signature provides a user-personalized secure signature;
(d) the content supplier encrypting information for each user using the user-personalized secure signature and downloading selected encrypted information to the particular user's memory location; and
(e) a particular user using the user-personalized secure signature to decode such downloaded selected encrypted information each time the user desires to access such information so that after use only the encoded encrypted information remains in the user memory location.

2. The method of claim 1 wherein the RAM portion of the hybrid optical disc is the user memory location for the downloaded content.

3. A method of transferring information from a content supplier from one or more databases, such information including program(s), audio, still pictures, video, or data files (for example lists, spreadsheets, reports, documents, presentation graphics, sales information), or combinations thereof to a location that uses an authorizing hybrid disc that permits the use of such transferred information, comprising the steps of:
(a) providing an authorizing hybrid optical disc having a ROM portion and a RAM portion;
(b) providing the ROM portion to include a preformed identification signature which is impressed into the ROM portion of the disc and is arranged to be difficult for a pirate to copy;
(c) providing the RAM portion which includes user-specific encrypted information which makes the optical disc unique for a specific user and in combination with the ROM preformed identification signature provides a user-personalized secure signature;
(d) a user communicating over a network with the content supplier and selecting information desired to be downloaded;
(e) the content supplier encrypting using the user-personalized secure signature and downloading the selected encrypted information to a user memory location; and
(f) the user using the user-personalized secure signature to decode such downloaded selected encrypted information each time the user desires to access such information so that after use only the encoded encrypted information remains in the user memory location.

4. The method of claim 3 further including the step of a user making payment via the network for the transfer of the selected encrypted information.

5. The method of claim 4 wherein payment is provided by a user by transferring a payment number which can be used for transferring a predetermined payment amount from a commercial institution that can be for a number of content selections to be selected by the holder of the hybrid optical disc.

6. The method of claim 3 wherein the RAM portion of the hybrid optical disc is the user memory location for the downloaded content.

7. The method of claim 3 wherein a channel is used to communicate with the remote location via a network and wherein the hybrid disc is encoded with the address of the remote location.

8. The method of claim 7 wherein the channel is the Internet.

9. A method of permitting authorized transfer of information from a content supplier from one or more databases, such information including program(s), audio, still pictures, video, or data files (for example lists, spreadsheets, reports, documents, presentation graphics, sales information), or combinations thereof to a location that uses an authorizing hybrid disc that permits the use of such transferred information, comprising the steps of:
(a) providing an authorizing hybrid optical disc having a ROM portion and a RAM portion;
(b) providing the ROM portion to include a preformed identification signature unique to a particular user which permits authorization for transfer and decoding information from the database(s) which is impressed into the ROM portion of the disc and is arranged to be difficult for a pirate to copy;
(c) providing the RAM portion which includes user-specific encrypted information which makes the optical disc unique for a specific user and in combination with the ROM preformed identification signature provides a user-personalized secure signature;
(d) a user communicating over a network with the content supplier providing the authorizing user-personalized secure signature to the content supplier and selecting information desired to be downloaded;
(e) the content supplier encrypting using the user-personalized secure signature and downloading the selected encrypted information to a user memory location; and
(f) the user using the user-personalized secure signature to decode such downloaded selected encrypted information each time the user desires to access such information so that after use only the encoded encrypted information remains in the user memory location.

10. The method of claim 9 further including the step of a user making payment via the network for the transfer of the selected encrypted information.
